# FASCICULE DE BREVET EUROPEEN

(11) **EP 2 618 648 B1**
(45) Date de publication et mention de la délivrance du brevet: **04.04.2018**
(21) Numéro de dépôt: 11752588.1
(22) Date de dépôt: 19.07.2011
(51) Int. Cl.: A01G 9/02

(54) **MUR VÉGÉTALISÉ AVEC HABILLAGE, ET ÉLÉMENT D'HABILLAGE POUR UN TEL MUR**
GRÜNE WAND MIT EINER VERKLEIDUNG UND VERKLEIDUNGSTEIL FÜR EINE SOLCHE WAND
GREEN WALL HAVING A COVERING, AND COVERING ELEMENT FOR SUCH A WALL

(30) Priorité: 21.07.2010 FR 1055934
(43) Date de publication de la demande: 31.07.2013
(73) Titulaire: Canevaflor, 69170 Tarare (FR)
(72) Inventeur: PELESZEZAK, Pascal, F-69170 Tarare (FR)
(74) Mandataire: Chevalier, Renaud Philippe
(86) Numéro de dépôt international: PCT/FR2011/051722
(87) Numéro de publication internationale: WO 2012/010792

(56) Documents cités:
- EP-A2- 1 803 346
- WO-A1-2010/031181
- FR-A1- 2 796 540
- FR-A1- 2 939 275
- GB-A- 2 457 537
- JP-A- 2010 148 396
- US-A1- 2007 125 024

## Description

La présente invention concerne un mur végétalisé avec habillage. Cette invention se rapporte aussi à un élément d'habillage pour un tel mur.

On connaît des structures pour mur végétalisé, par exemple sous forme d'un élément végétalisé vertical formé de panneaux grillagés couverts de panneaux en plastique dans le brevet US 2007/0125024 A1, ou qui sont composées de casiers de forme générale prismatique, pouvant être juxtaposés et/ou superposés. Chaque casier de cette structure possède un châssis, qui supporte des faces grillagées ou maillées, notamment des faces avant et arrière, grillagées ou maillées. Les casiers sont remplis d'un substrat de plantation, tel que terreau qui, en cas de configuration ajourée des faces par lesquelles ces casiers sont rendus adjacents, peut s'étendre sans discontinuité à l'intérieur de la structure en question. A titre d'exemples, on peut ici citer le brevet français FR 2872381 B1 et son équivalent EP 1771062 ou le brevet français FR 2939275 A1. Les faces avant et arrière des différents casiers sont tapissées intérieurement d'une nappe ou toile, par exemple en matériau textile, qui retient le terreau et peut aussi retenir l'eau et l'humidité. Les végétaux sont plantés dans le substrat au travers de la nappe ou toile et se développent aussi en traversant cette nappe ou toile.

Dans les réalisations actuelles, la face avant de chaque casier peut être constituée par un cadre grillagé ou maillé amovible, ce qui permet un accès à l'intérieur de la structure, notamment pour la mise en place et le remplacement du substrat de plantation, ainsi que pour l'accès à d'autres composants intérieurs, tels que des réseaux d'eau et éventuellement d'air et leurs supports. Le brevet EP1803346 A2 présente un casier avec une face avant amovible, ouvrant à la manière d'une porte. Avec une telle conception, l'utilisateur ne dispose pas de moyens pouvant l'aider lorsqu'il s'agit de planter des végétaux, en lui indiquant les positions correctes de ceux-ci. De plus, en pratiquant avec un outil tel qu'un cutter des incisions dans la nappe ou toile pour planter les végétaux, l'utilisateur risque de percer des tuyaux appartenant aux réseaux internes d'eau ou d'air. Par ailleurs, le grillage et la nappe ou toile donnent au mur un aspect peu esthétique, en l'absence de plantes ou lorsque celles-ci sont, notamment en hiver, dépourvues de feuillage.

La présente invention vise à éviter ces inconvénients, et elle a donc pour but d'améliorer les murs végétalisés du genre ici considéré, en particulier sous l'aspect de la facilité de plantation des végétaux, tout en améliorant leur esthétique.

A cet effet, l'invention a pour premier objet un mur végétalisé, du genre de ceux comprenant une structure composée de casiers de forme générale prismatique, prévus pour être juxtaposés et/ou superposés, chaque casier possédant un châssis qui supporte des faces grillagées ou maillées avec notamment une face avant grillagée ou maillée, les casiers étant prévus pour être remplis d'un substrat de plantation pour des végétaux se développant au moins sur la face avant de ces casiers, ledit mur végétalisé étant essentiellement caractérisé par le fait qu'il comprend, au moins sur le côté avant de ses casiers, un habillage constitué par des panneaux ou coques fixés de manière amovible, notamment par clipsage, sur les faces avant de ces casiers, les panneaux ou coques comportant des ouvertures pré-percées prévues pour la plantation et le développement de végétaux.

Dans un mode de réalisation préféré du mur végétailisé avec habillage objet de la présente invention, les panneaux ou coques constituant cet habillage comportent des moyens de clipsage agencés pour coopérer avec des fils métalliques des faces avant grillagées ou maillées des casiers, en particulier les fils métalliques horizontaux du grillage ou maillage de ces faces, les panneaux ou coques étant de préférence appliqués contre la côte intérieur du grillage ou maillage.

Les panneaux ou coques constituant l'habillage sont, de préférence, des pièces moulées ou thermoformées en matière synthétique. Ces pièces peuvent comporter, chacune, une ou plusieurs ouvertures pré-percées soit de forme sensiblement circulaire, soit de forme allongée horizontalement, telle qu'elliptique ou oblongue.

Ainsi, l'invention propose de doter les casiers du mur végétalisé d'un habillage qui, présent au moins sur les faces avant de ces casiers, remplace avantageusement la nappe ou toile, en procurant notamment les avantages suivants :
Par ses ouvertures, cet habillage constitue un guide visuel pour la plantation des végétaux dans le substrat, ce qui rend l'opération de plantation plus facile et plus rapide.

A ceci s'ajoute le fait que les contraintes de déploiement et fixation de la nappe ou toile sont supprimées, et que le risque de percement des tuyaux internes est lui aussi éliminé.

Les ouvertures des panneaux ou coques facilitent aussi le rajout de substrat de plantation, ainsi que les interventions sur les composants internes, en particulier les réseaux d'eau et d'air prévus dans l'épaisseur du mur végétalisé.

Les ouvertures de ces panneaux ou coques permettent encore de récupérer plus d'eau de pluie; éventuellement, les panneaux ou coques possèdent une double paroi, formant une réserve d'eau.

L'ajout des panneaux ou coques ne modifie pas la structure de base du mur végétalisé, en particulier ses casiers. Ainsi, ces panneaux ou coques peuvent être montés sur un mur végétalisé préexistant.

L'installation des panneaux ou coques, qui sont des éléments pleins excepté leurs ouvertures, améliore la retenue du terreau ainsi que de l'eau, dans l'épaisseur du mur végétalisé. Le montage desdits panneaux ou coques sur le côté intérieur du grillage ou maillage assure la stabilisation de ces panneaux ou coques eux-mêmes.

Plus particulièrement, le mode de réalisation préférentiel des panneaux ou coques apporte comme avantages :
- une facilité de préfabrication, avec les formes plates ou en relief souhaitées,
- une légèreté des panneaux ou coques, permettant leur installation sans nécessité de renforcer le châssis des casiers,
- une élasticité permettant la réalisation directe des moyens de clipsage de ces panneaux ou coques,
- une simplification du grillage ou maillage, qui peut être réduit aux seuls fils horizontaux nécessaires pour l'accrochage des panneaux ou coques,
- une fabrication avec des ouvertures pré-découpées, séparées du reste du panneau ou de la coque par des zones ruptibles, de manière à obtenir des ouvertures aux positions souhaitées, en fonction d'un schéma de plantation pré-établi, ces ouvertures pouvant être dégagées en atelier, avant la pose des panneaux ou coques,
- une possibilité d'ajouter un éclairage, notamment en prévoyant dans les panneaux ou coques des passages pour câbles électriques ou même un « pré-câblage » électrique,
- une possibilité d'ajouter sur les panneaux ou coques des moyens d'acheminement d'eau notamment pour brumisation.
- une réalisation esthétique, par le choix des couleurs ou d'un aspect particulier, par exemple un aspect minéral ou une forme irrégulière de « rocher », ce qui a son importance en période hivernale.

Compte tenu de leurs ouvertures, les panneaux ou coques peuvent être fixés sur des faces avant de casiers ne nécessitant pas d'être elles-mêmes amovibles ou ouvrantes.

Cependant, ces panneaux ou coques peuvent aussi être montés sur des faces avant de casiers qui sont prévues amovibles, ou qui sont ouvrantes à la manière de portes articulées sur des charnières au châssis des casiers.

De plus, les panneaux ou coques constituant l'habillage peuvent comporter des extensions qui, dans la position montée de ces panneaux ou coques, s'étendent dans un plan sensiblement horizontal vers l'intérieur de la structure du mur végétalisé, donc dans l'épaisseur de ce mur, de manière à former des « étagères » qui retiennent verticalement le substrat de plantation, pour éviter le tassement de ce substrat.

Des extensions vers l'extérieur de ces panneaux ou coques, notamment sous la forme de tuteurs adaptés à certaines plantes, sont aussi envisageables.

Enfin, même si les panneaux ou coques sont initialement destinés à l'habillage de la face avant des casiers, donc du mur végétalisé, ces panneaux ou coques sont aussi adaptés pour habiller toute autre face exposée de ce mur végétalisé, par exemple la face arrière dans le cas d'un mur végétalisé recevant des végétaux se développant sur les deux faces principales du mur, ou les faces latérales verticales qui délimitent le mur à ses deux extrémités.

L'invention a aussi pour objet, en tant que tel, un élément d'habillage pour mur végétalisé se présentant comme un panneau ou une coque avec une ou des ouvertures pré-percées et avec des moyens de fixation amovible notamment par clipsage, pour son adaptation au moins sur les faces avant grillagées ou maillées de casiers constitutifs de la structure d'un mur végétalisé. Les moyens de fixation amovible sont notamment des zones de profil en gouttière, prévues pour s'accrocher sur des fils métalliques horizontaux du grillage ou maillage des faces des casiers du mur végétalisé.

L'invention sera mieux comprise à l'aide de la description qui suit, en référence au dessin schématique annexé représentant, à titre d'exemples, quelques formes d'exécution de cet élément d'habillage et du mur végétalisé en faisant application :
Figure 1 représente, en perspective, un casier de mur végétalisé, avant mise en place des éléments d'habillage ;

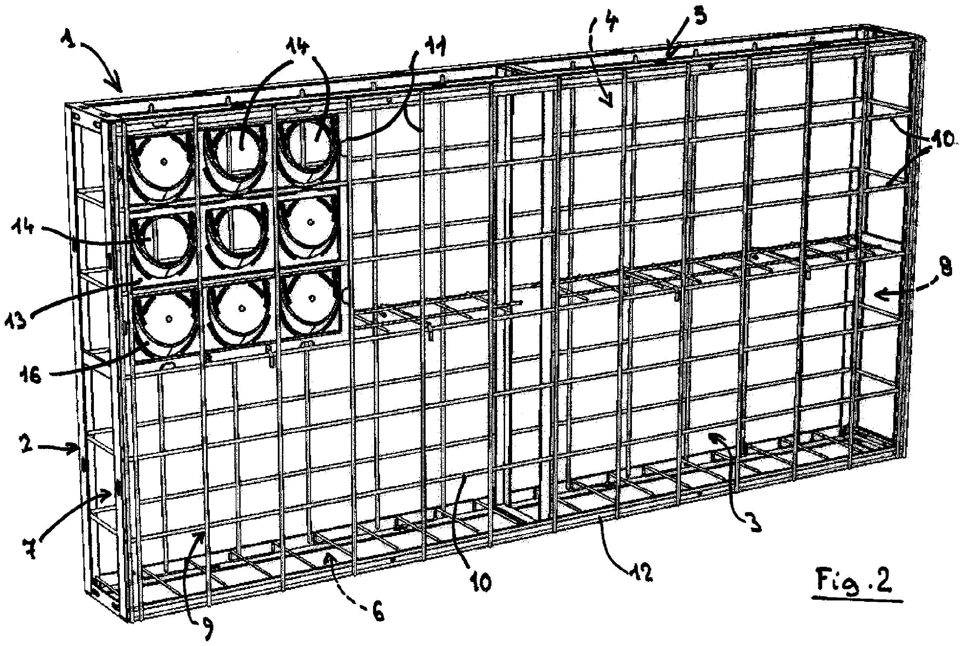

Figure 2 est une vue en perspective et par l'avant du casier de la figure 1, après mise en place d'un premier élément d'habillage ;
Figure 3 est une vue en perspective et par l'arrière du même casier, après mise en place complète des éléments d'habillage ;
Figure 4 est une vue de face d'un élément d'habillage, tel que ceux mis en place sur le casier des figures précédentes ;
Figure 5 est une vue de face d'une variante de cet élément d'habillage ;
Figures 6 et 7 sont des vues de détail, en coupe verticale, d'un tel élément d'habillage ;
Figure 8 est une vue en coupe verticale d'un mur végétalisé équipé de tels éléments d'habillage, avec indication de divers aménagements complémentaires.

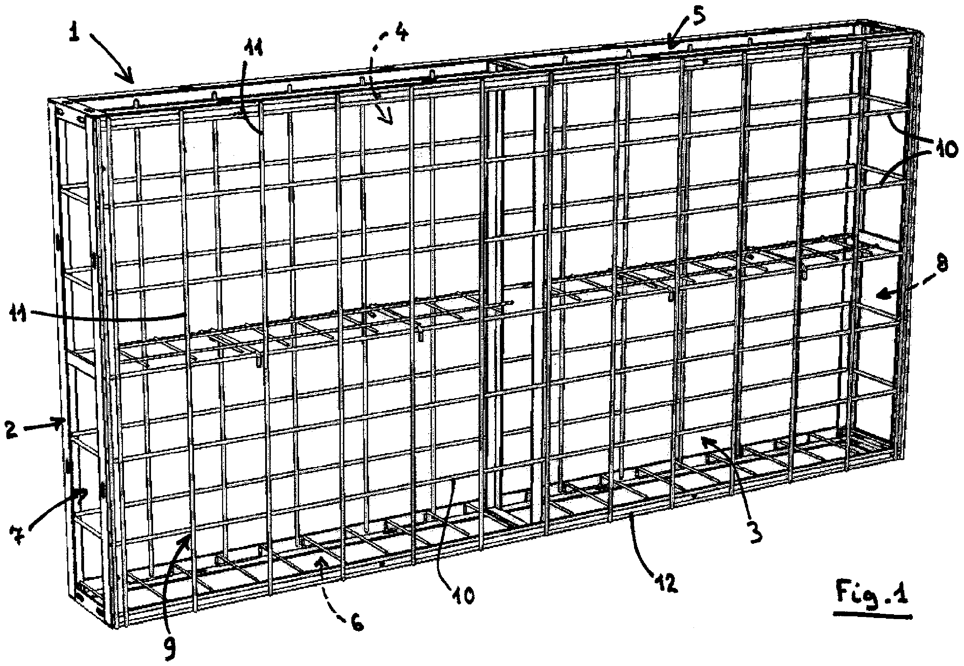

La figure 1 représente un casier 1, de forme générale parallélépipédique, constitutif de la structure d'un mur végétalisé. Le casier possède un châssis 2, formé de montants, de longerons et de traverses, qui délimitent une face avant 3, une face arrière 4, une face supérieure 5, une face inférieure 6 et deux faces latérales 7 et 8. Les différentes faces 3 à 8 du casier 1 sont des faces grillagées, c'est-à-dire qu'elles comportent un grillage ou maillage 9 formé par des fils métalliques. En particulier, la face avant 3 et la face arrière 4 présentent un grillage formé par des fils métalliques horizontaux 10 et par des fils métalliques verticaux 11 entrecroisés. La face avant 3 du casier 1 peut comporter un cadre rectangulaire amovible 12, lequel supporte les fils métalliques horizontaux 10 et verticaux 11 de cette face.

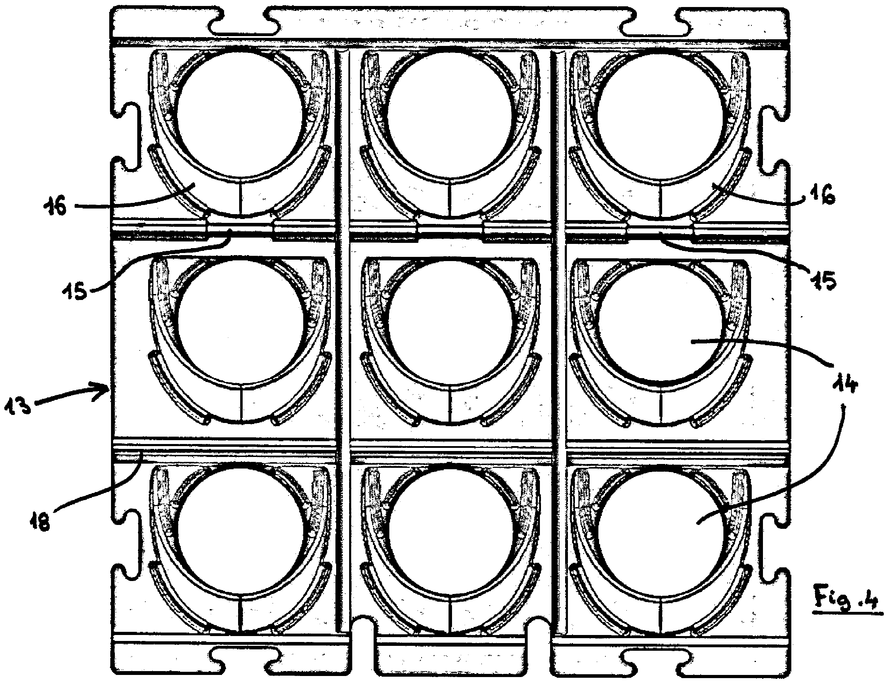

La face avant 3 du casier 1 est prévue pour recevoir un habillage, constitué par la juxtaposition de coques 13 dont l'une est représentée sur la figure 4

La coque 13 est une pièce moulée ou thermoformée, en matière synthétique armée ou non, de forme générale carrée ou rectangulaire, qui comporte plusieurs ouvertures 14 de forme générale circulaire, disposées suivant des lignes horizontales et des rangées verticales. Les dimensions longitudinale et verticale de la coque 13, ainsi que les entraxes des ouvertures 14, correspondent au côté des mailles ici carrées formées par les fils métalliques 10 et 11 du grillage 9.

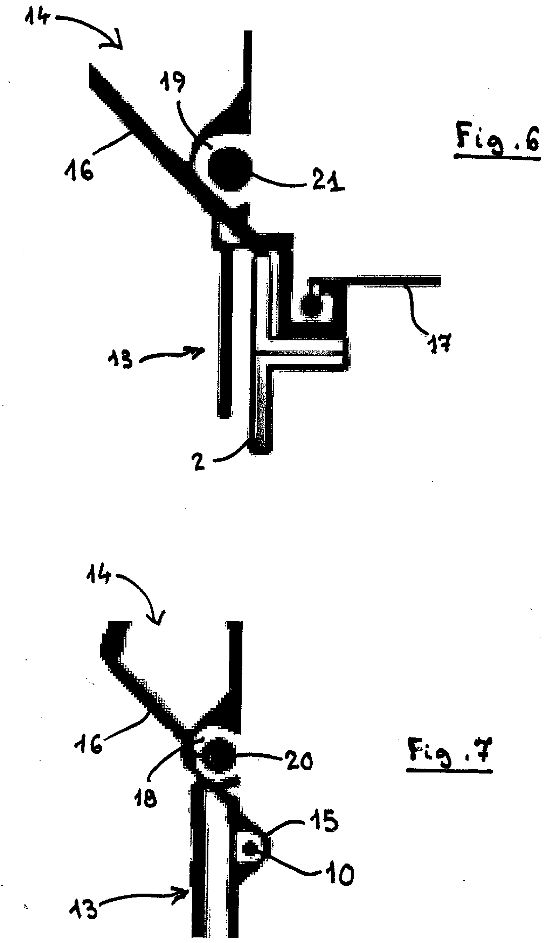

Comme le montre en particulier la figure 7, la coque 13 présente, à un niveau situé entre les lignes d'ouvertures 14, des zones 15 de profil en gouttière, prévues pour se clipser sur des fils métalliques horizontaux 10 du grillage 9.

Dans l'exemple illustré, la coque 13 présente des parties en relief 16, sur lesquelles sont situées les ouvertures 14 qui, lorsque cette coque 13 est placée dans un plan vertical, se situent elles-mêmes dans des plans légèrement inclinés sur la verticale.

Grâce à ses zones 15 de profil en gouttière, la coque 13 est accrochée de manière amovible sur le grillage 9 de la face avant 3 du casier 1. Ainsi, en juxtaposant les coques 13, toute la face avant 3 du casier 1 se trouve « habillée ». Plus particulièrement, la coque 13 est ainsi appliquée contre le côté intérieur du grillage 9.

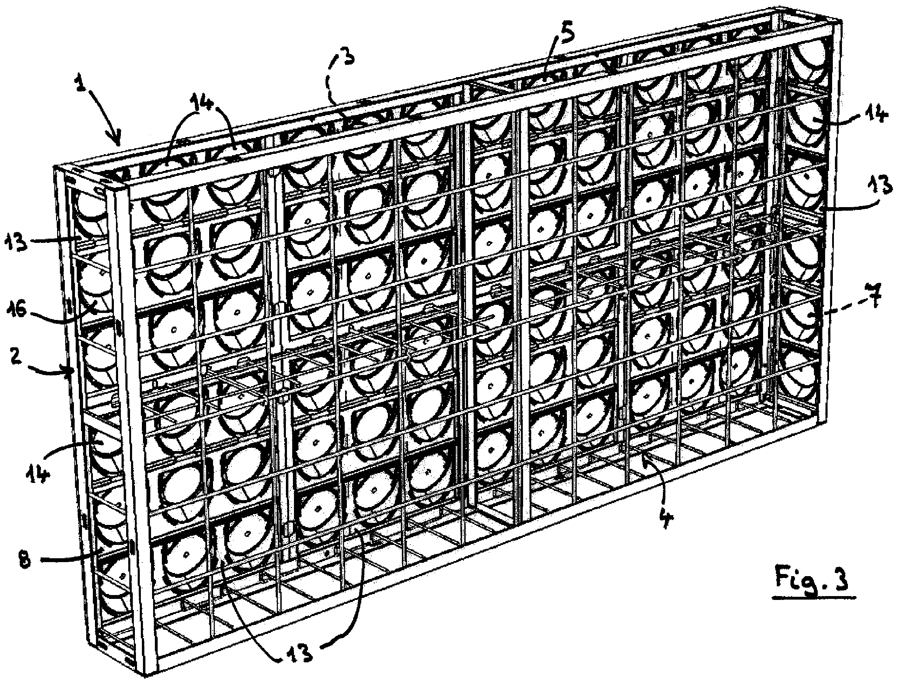

Selon le même principe, il est aussi possible d'habiller les deux faces latérales 7 et 8 du casier 1, ou du moins l'une de ces faces latérales, comme le montre la figure 3 (à droite).

Dans la mesure où les ouvertures 14 des coques 13 sont pré-percées, il est possible de dégager ou non ces ouvertures 14 avant la mise en place des coques 13, pour former un motif particulier, de type répétitif ou aléatoire, ceci en relation avec la composition végétale souhaitée.

En utilisation, le casier 1 est juxtaposé ou superposé à des casiers similaires, et l'ensemble des casiers est rempli d'un substrat de plantation qui, au moins sur le côté avant, est retenu par l'habillage que constituent les coques 13 mises en place. Les ouvertures 14 dégagées de ces coques 13 autorisent la plantation de végétaux dans le substrat, et le développement de ces végétaux vers l'extérieur des casiers 1 et de leur habillage. Elles permettent aussi le rajout de substrat de plantation.

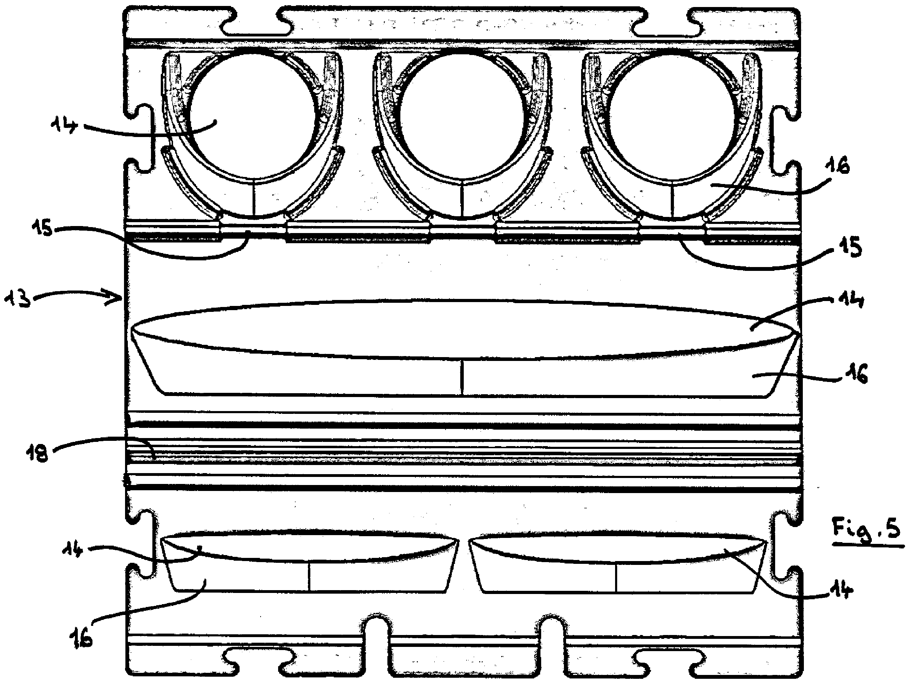

Dans une variante, illustrée par la figure 5, la coque 13 présente des ouvertures 14 de forme oblongue, dont la plus grande dimension s'étend horizontalement, par référence à la position de montage normale de cette coque 13 sur un casier 1.

Quelle que soit la forme de ses ouvertures 14, la coque 13 peut comporter, dans sa partie inférieure, une extension sensiblement horizontale 17 qui, dans la position montée de la coque 13, s'enfonce vers l'intérieur du casier 1, donc dans l'épaisseur du substrat de plantation remplissant ce casier 1, en formant une « étagère » apte à retenir verticalement ledit substrat de plantation. Comme le montre la figure 6, l'extension 17 formant étagère est avantageusement clipsée sur l'arrière de la coque 13, et montée pivotante pour faciliter le rangement, le transport et l'installation de la coque 13.

En se référant aux figures 6 et 7, la coque peut encore comporter des fourreaux 18 et 19 notamment horizontaux, prévus pour recevoir des câbles électriques 20 ou des tuyaux d'acheminement d'eau 21.

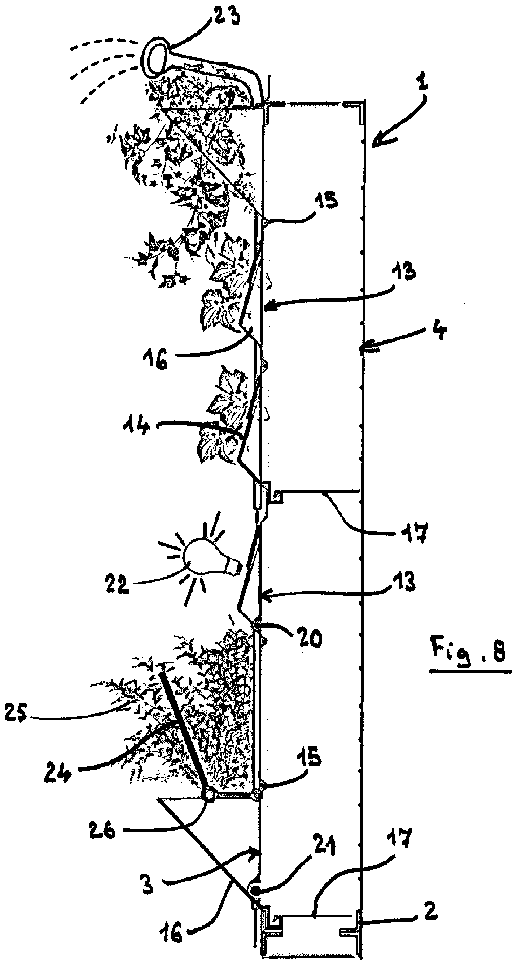

La figure 8 montre un mur végétalisé qui comporte divers aménagements complémentaires, permis par la mise en place de coques 13, telles que précédemment décrites, sur le côté avant de ce mur. Les câbles électriques 20 passant dans les fourreaux 18 permettent ainsi d'alimenter électriquement un dispositif d'éclairage 22, notamment à diodes électroluminescentes, mettant en valeur le mur végétalisé. Les tuyaux d'acheminement d'eau 21, passant dans les fourreaux 19, permettent d'alimenter un dispositif de brumisation 23 pouvant être placé extérieurement, au sommet du mur végétalisé. Comme le montre encore cette figure 8, les ouvertures 14 sont formées sur des parties en relief 16 qui constituent des avancées plus moins importantes, en forme de godets. En particulier, les parties en relief 16 les plus saillantes peuvent porter des tuteurs 24 pour le maintien de certaines plantes 25 se développant sur le mur végétalisé. Les tuteurs 24 peuvent être fixés de manière amovible, par exemple par clipsage, sur la coque 13 et/ou être montés pivotants autour d'un axe de rotation horizontal 26.

Un habillage constitué de panneaux ou coques 13, tel que précédemment décrit, est applicable à toute structure de mur végétalisé comportant au moins une face avant grillagée ou maillée, quelles que soient les autres particularités de cette structure.

On ne s'éloignerait pas du cadre de l'invention, telle que définie dans les revendications annexées, quels que soient notamment :
- La matière constitutive et le mode de fabrication des panneaux ou coques,
- La forme de ces panneaux ou coques, en particulier le nombre et la forme de leurs ouvertures,
- Les aménagements particuliers et accessoires que peuvent comporter lesdits panneaux ou coques, par exemple l'incorporation directe de câbles électriques ou la disposition verticale (et non horizontale) de tels câbles.

## Revendications

1. Mur végétalisé, comprenant une structure composée de casiers (1) de forme générale prismatique, prévus pour être juxtaposés et/ou superposés, chaque casier (1) possédant un châssis (2) qui supporte des faces grillagées ou maillées avec notamment une face avant (3) grillagée ou maillée, les casiers (1) étant prévus pour être remplis d'un substrat de plantation pour des végétaux se développant au moins sur la face avant (3) de ces casiers, **caractérisé en ce qu'**il comprend, au moins sur le côté avant de ses casiers (1), un habillage constitué par des panneaux ou coques (13) fixés de manière amovible, notamment par clipsage, sur les faces avant (3) de ces casiers (1), les panneaux ou coques (13) comportant des ouvertures (14) pré-percées prévues pour la plantation et le développement de végétaux.

2. Mur végétalisé avec habillage selon la revendication 1, **caractérisé en ce que** les panneaux ou coques (13) constituant l'habillage comportent des moyens de clipsage (15) agencés pour coopérer avec des fils métalliques des faces avant (3) grillagées ou maillées des casiers (1), en particulier les fils métalliques horizontaux (10) du grillage ou maillage (9) de ces faces (3), les panneaux ou coques (13) étant de préférence appliqués contre les côté intérieur du grillage ou maillage (9).

3. Mur végétalisé avec habillage selon la revendication 1 ou 2, **caractérisé en ce que** les panneaux ou coques (13) constituant l'habillage sont des pièces moulées ou thermoformées en matière synthétique.

4. Mur végétalisé avec habillage selon la revendication 3, **caractérisé en ce que** les pièces moulées ou thermoformées comportent chacune une ou plusieurs ouvertures (14) pré-percées de forme sensiblement circulaire.

5. Mur végétalisé avec habillage selon la revendication 3, **caractérisé en ce que** les pièces moulées ou thermoformées comportent chacune une ou plusieurs ouvertures (14) pré-percées de forme allongée horizontalement, telle qu'elliptique ou oblongue.

6. Mur végétalisé avec habillage selon l'une des revendications 1 à 5, **caractérisé en ce que** les panneaux ou coques constituant l'habillage sont montés sur des faces avant (3) de casiers (1) qui sont prévues elles-mêmes amovibles.

7. Mur végétalisé avec habillage selon l'une des revendications 1 à 5, **caractérisé en ce que** les panneaux ou coques (13) constituant l'habillage sont montés sur des faces avant (3) de casiers (1) qui sont ouvrantes à la manière de portes articulées sur des charnières du châssis (4) des casiers (1).

8. Mur végétalisé avec habillage selon l'une des revendications 1 à 7, **caractérisé en ce que** les panneaux ou coques (13) constituant l'habillage comportent des extensions (17) qui, dans la position montée de ces panneaux ou coques (13), s'étendent dans un plan sensiblement horizontal vers l'intérieur de la structure du mur végétalisé, donc dans l'épaisseur de ce mur, de manière à former des « étagères » qui retiennent verticalement le substrat de plantation.

9. Elément d'habillage pour mur végétalisé, **caractérisé en ce qu'**il se présente comme un panneau ou une coque (13) avec une ou des ouvertures (14) pré-percées et avec des moyens de fixation amovible (15) notamment par clipsage, pour son adaptation au moins sur les faces avant (3) grillagées ou maillées de casiers (1) constitutifs de la structure d'un mur végétalisé.

10. Elément d'habillage pour mur végétalisé selon la revendication 9, **caractérisé en ce que** les moyens de fixation amovible sont des zones (15) de profil en gouttière, prévues pour s'accrocher sur des fils métalliques horizontaux (10) du grillage ou maillage (9) des faces des casiers (1) du mur végétalisé.

11. Elément d'habillage pour mur végétalisé selon la revendication 9 ou 10, **caractérisé en ce qu'**il comporte des ouvertures (14) pré-découpées, séparées du reste du panneau ou de la coque (13) par des zones ruptibles.

12. Elément d'habillage pour mur végétalisé selon l'une des revendications 9 à 11, **caractérisé en ce que** sa ou ses ouvertures (14) est/sont de forme circulaire.

13. Elément d'habillage pour mur végétalisé selon l'une des revendications 9 à 11, **caractérisé en ce que** sa ou ses ouvertures (14) est/sont de forme allongée horizontalement, telle qu'elliptique ou oblongue.

14. Elément d'habillage pour mur végétalisé selon l'une des revendications 9 à 13, **caractérisé en ce qu'**il se présente comme un panneau ou une coque (13) à double paroi, formant une réserve d'eau.

15. Elément d'habillage pour mur végétalisé selon l'une des revendications 9 à 14, **caractérisé en ce que** des passages (18) pour câbles électriques (20) ou un pré-câblage sont prévus dans le panneau ou la coque (13), pour l'ajout d'un éclairage (22).

16. Elément d'habillage pour mur végétalisé selon l'une des revendications 9 à 15, **caractérisé en ce qu'**il comporte des moyens d'acheminement d'eau (21), notamment pour brumisation (23).

17. Elément d'habillage pour mur végétalisé selon l'une des revendications 9 à 16, **caractérisé en ce qu'**il comporte des extensions vers l'extérieur, notamment sous la forme de tuteurs (24) adaptés à certaines plantes.

18. Elément d'habillage pour mur végétalisé selon l'une des revendications 9 à 17, **caractérisé en ce qu'**il est réalisé sous la forme d'une coque thermoformée (13).

## Patentansprüche

1. Begrünte Mauer, umfassend eine Struktur, die aus Kästen (1) von allgemein prismatischer Form zusammengesetzt ist, die dafür vorgesehen sind, nebeneinander und/oder aufeinander angeordnet zu werden, wobei jeder Kasten (1) einen Rahmen (2) besitzt, der gitterartige oder netzartige Flächen mit insbesondere einer gitterartigen oder netzartigen Vorderfläche (3) trägt, wobei die Kästen (1) dafür vorgesehen sind, mit einem Pflanzsubstrat für Pflanzen befüllt zu werden, die mindestens an der Vorderfläche (3) dieser Kästen wachsen, **dadurch gekennzeichnet, dass** sie mindestens an der Vorderseite dieser Kästen (1) eine Verkleidung umfasst, die aus Platten oder Schalen (13) besteht, die in abnehmbarer Art, insbesondere durch Einklicken, an den Vorderflächen (3) dieser Kästen (1) befestigt sind, wobei die Platten oder Schalen (13) vorgebohrte Öffnungen (14) umfassen, die für das Anpflanzen und das Wachsen von Pflanzen vorgesehen sind.

2. Begrünte Mauer mit einer Verkleidung nach Anspruch 1, **dadurch gekennzeichnet, dass** die Platten oder Schalen (13), aus denen die Verkleidung besteht, Einklickmittel (15) umfassen, die dafür ausgebildet sind, mit Metalldrähten der gitterartigen oder netzartigen Vorderflächen (3) der Kästen (1), insbesondere den horizontalen Metalldrähten (10) des Gitters oder Netzes (9) dieser Flächen (3) zusammenwirken, wobei die Platten oder Schalen (13) vorzugsweise an den Innenseiten des Gitters oder Netzes (9) anliegen.

3. Begrünte Mauer mit einer Verkleidung nach Anspruch 1 oder 2, **dadurch gekennzeichnet, dass** die Platten oder Schalen (13), aus denen die Verkleidung besteht, Form- oder Thermoformteile aus synthetischem Material sind.

4. Begrünte Mauer mit einer Verkleidung nach Anspruch 3, **dadurch gekennzeichnet, dass** die Form- oder Thermoformteile jedes eine oder mehrere vorgebohrte Öffnungen (14) von im Wesentlichen kreisrunder Form umfassen.

5. Begrünte Mauer mit einer Verkleidung nach Anspruch 3, **dadurch gekennzeichnet, dass** die Form- oder Thermoformteile jedes eine oder mehrere vorgebohrte Öffnungen (14) von horizontal langgestreckter, wie etwa elliptischer oder länglicher Form umfassen.

6. Begrünte Mauer mit einer Verkleidung nach einem der Ansprüche 1 bis 5, **dadurch gekennzeichnet, dass** die Platten oder Schalen, aus denen die Verkleidung besteht, an Vorderflächen (3) von Kästen (1) montiert sind, die ihrerseits abnehmbar vorgesehen sind.

7. Begrünte Mauer mit einer Verkleidung nach einem der Ansprüche 1 bis 5, **dadurch gekennzeichnet, dass** die Platten oder Schalen (13), aus denen die Verkleidung besteht, an Vorderflächen (3) von Kästen (1) montiert sind, die in der Art von Türen, welche an Scharnieren des Rahmens (4) der Kästen (1) angelenkt sind, geöffnet werden können.

8. Begrünte Mauer mit einer Verkleidung nach einem der Ansprüche 1 bis 7, **dadurch gekennzeichnet, dass** die Platten oder Schalen (13), aus denen die Verkleidung besteht, Erstreckungen (17) umfassen, die sich in der montierten Stellung dieser Platten oder Schalen (13) in einer im Wesentlichen horizontalen Ebene zum Inneren der Struktur der begrünten Mauer, also in die Dicke dieser Mauer erstrecken, derart, dass sie "Fachböden" bilden, die das Pflanzsubstrat vertikal zurückhalten.

9. Verkleidungselement für eine begrünte Mauer, **dadurch gekennzeichnet, dass** es sich als eine Platte oder eine Schale (13) darstellt mit einer oder mehreren vorgebohrten Öffnungen (14) und mit Mitteln zur abnehmbaren Befestigung (15), insbesondere durch Einklicken, für sein Abstimmen auf mindestens die gitterartigen oder netzartigen Vorderflächen (3) der Kästen (1), aus denen die Struktur einer begrünten Mauer besteht.

10. Verkleidungselement für eine begrünte Mauer nach Anspruch 9, **dadurch gekennzeichnet, dass** die abnehmbaren Befestigungsmittel Bereiche (15) von Regenrinnenprofil sind, die dafür vorgesehen sind, sich in horizontale Metalldrähte (10) des Gitters oder Netzes (9) der Flächen der Kästen (1) der begrünten Mauer einzuhaken.

11. Verkleidungselement für eine begrünte Mauer nach Anspruch 9 oder 10, **dadurch gekennzeichnet, dass** es vorausgeschnittene Öffnungen (14) umfasst, die durch reißfähige Bereiche vom Rest der Platte oder der Schale (13) getrennt sind.

12. Verkleidungselement für eine begrünte Mauer nach einem der Ansprüche 9 bis 11, **dadurch gekennzeichnet, dass** seine Öffnung(en) (14) von kreisrunder Form ist/sind.

13. Verkleidungselement für eine begrünte Mauer nach einem der Ansprüche 9 bis 11, **dadurch gekennzeichnet, dass** seine Öffnung(en) (14) von horizontal langgestreckter, wie etwa elliptischer oder länglicher Form ist/sind.

14. Verkleidungselement für eine begrünte Mauer nach einem der Ansprüche 9 bis 13, **dadurch gekennzeichnet, dass** es sich als eine Platte oder eine Schale (13) mit Doppelwand darstellt, die einen Wasserspeicher bildet.

15. Verkleidungselement für eine begrünte Mauer nach einem der Ansprüche 9 bis 14, **dadurch gekennzeichnet, dass** in der Platte oder der Schale (13) Kanäle (18) für elektrische Kabel (20) oder eine Vorverkabelung für das Hinzufügen einer Beleuchtung (22) vorgesehen sind.

16. Verkleidungselement für eine begrünte Mauer nach einem der Ansprüche 9 bis 15, **dadurch gekennzeichnet, dass** es Mittel zum Zuführen von Wasser (21), insbesondere zum Vernebeln (23), umfasst.

17. Verkleidungselement für eine begrünte Mauer nach einem der Ansprüche 9 bis 16, **dadurch gekennzeichnet, dass** es Erstreckungen nach außen hin umfasst, insbesondere in der Form von Stützen (24), die auf bestimmte Pflanzen abgestimmt sind.

18. Verkleidungselement für eine begrünte Mauer nach einem der Ansprüche 9 bis 17, **dadurch gekennzeichnet, dass** es in der Form einer thermogeformten Schale (13) ausgeführt ist.

## Claims

1. A green wall comprising a structure composed of generally prismatic-shaped compartments (1), provided to be juxtaposed and/or superposed, each compartment (1) having a frame (2) that supports grid-like or mesh-like faces with in particular a grid-like or mesh-like front face (3), the compartments (1) being provided to be filled with a planting substrate for plants growing at least on the front face (3) of these compartments, **characterized in that** it comprises, at least on the front side of its compartments (1), a cladding consisting of panels or shells (13) removably fastened, in particular by clipping, on the front faces (3) of these compartments (1), the panels or shells (13) including pre-drilled openings (14) provided for planting and growing plants.

2. The green wall with cladding according to claim 1, **characterized in that** the panels or shells (13) constituting the cladding include clipping means (15) arranged to cooperate with metal wires of the grid-like or mesh-like front faces (3) of the compartments (1), particularly the horizontal metal wires (10) of the grid or mesh (9) of these faces (3), the panels or shells (13) being preferably applied against the inner side of the grid or mesh (9).

3. The green wall with cladding according to claim 1 or 2, **characterized in that** the panels or shells (13) constituting the cladding are molded or thermoformed parts made of synthetic material.

4. The green wall with cladding according to claim 3, **characterized in that** each of the molded or thermoformed parts includes one or more pre-drilled opening(s) (14) with a substantially circular shape.

5. The green wall with cladding according to claim 3, **characterized in that** each of the molded or thermoformed parts includes one or more pre-drilled opening(s) (14) with a horizontally elongated shape, such as an elliptical or oblong shape.

6. The green wall with cladding according to any of claims 1 to 5, **characterized in that** the panels or shells constituting the cladding are mounted on front faces (3) of compartments (1) which are themselves provided to be removable.

7. The green wall with cladding according to any of claims 1 to 5, **characterized in that** the panels or shells (13) constituting the cladding are mounted on front faces (3) of compartments (1) which open to the manner of doors articulated on hinges of the frame (4) of the compartments (1).

8. The green wall with cladding according to any of claims 1 to 7, **characterized in that** the panels or shells (13) constituting the cladding include extensions (17) which, in the mounted position of these panels or shells (13), extend in a substantially horizontal plane towards the interior of the structure of the green wall, therefore in the thickness of this wall, so as to form "shelves" that hold the planting substrate vertically.

9. A cladding element for a green wall, **characterized in that** it is in the form of a panel or a shell (13) with one or more pre-drilled opening(s) (14) and with removable fastening means (15) in particular by clipping, for its adaptation on at least the grid-like or mesh-like front faces (3) of the compartments (1) constituting the structure of a green wall.

10. The cladding element for a green wall according to claim 9, **characterized in that** the removable fastening means are gutter profiled areas (15) provided to hang on horizontal metal wires (10) of the grid or mesh (9) of the faces of the compartments (1) of the green wall.

11. The cladding element for a green wall according to claim 9 or 10, **characterized in that** it includes pre-cut openings (14) separated from the rest of the panel or shell (13) by breakable areas.

12. The cladding element for a green wall according to any of claims 9 to 11, **characterized in that** the opening(s) (14) thereof is/are of a circular shape.

13. The cladding element for a green wall according to any of claims 9 to 11, **characterized in that** the opening(s) (14) thereof is/are of a horizontally elongate shape, such as an elliptical or oblong shape.

14. The cladding element for a green wall according to any of claims 9 to 13, **characterized in that** it is in the form of a panel or shell (13) with a double wall, forming a reserve of water.

15. The cladding element for a green wall according to any of claims 9 to 14, **characterized in that** passages (18) for electrical cables (20) or a pre-wiring are provided in the panel or shell (13) for the addition of a lighting (22).

16. The cladding element for a green wall according to any of claims 9 to 15, **characterized in that** it includes means for conveying water (21), in particular for misting (23).

17. The cladding element for a green wall according to any of claims 9 to 16, **characterized in that** it includes outward extensions, in particular in the form of stakes (24) adapted to some plants.

18. The cladding element for a green wall according to any of claims 9 to 17, **characterized in that** it is made in the form of a thermoformed shell (13).
